# EUROPEAN PATENT SPECIFICATION

(11) **EP 1 046 787 B1**
(45) Date of publication and mention of the grant of the patent: **07.06.2006**
(21) Application number: 00302670.5
(22) Date of filing: 30.03.2000
(51) Int. Cl.: F01D 25/08, F01D 25/26, F01D 11/24, F01D 19/02, F01D 21/00

(54) **Turbine inner shell heating and cooling flow circuit**
Heiz- und Kühlkreislauf für das Innengehäuse einer Turbine
Circuit de chauffage et de refroidissement d'un boîtier intérieur d'une turbine

(30) Priority: 23.04.1999 US 298400
(43) Date of publication of application: 25.10.2000
(73) Proprietor: GENERAL ELECTRIC COMPANY, Schenectady, NY 12345 (US)
(72) Inventor: Leach, David, Niskayuna, New York 12309 (US); Kellock, Iain Robertson, Clifton Park, New York 12065 (US); Plemmons, Larry Wayne, Hamilton, Ohio 45014 (US); Chow, Cedric, Schenectady, New York 12305 (US); Sexton, Brendan Francis, Simpsonville, South Carolina 29681 (US); Schroder, Mark Stewart, Hendersonville, South Carolina 28739 (US)
(74) Representative: Pedder, James Cuthbert

(56) References cited:
- EP-A- 0 735 243
- US-A- 5 605 437

## Description

The present invention relates generally to gas turbines, particularly to land-based, i.e., industrial gas turbines employing closed-circuit steam or air cooling of hot gas path components and more particularly to a gas turbine having inner and outer turbine shells constructed to provide positive bucket tip clearance control.

In prior U.S. Patent No. 5,685,693, of common assignee herewith, there is disclosed a land-based, i.e., industrial gas turbine having a turbine outer shell surrounding an inner shell supporting non-rotational parts of certain of the stages. Particularly, the inner shell supports the first and second-stage nozzles, as well as the first and second-stage shrouds. The outer shell directly supports the nozzles and shrouds of additional stages. It will be appreciated that each of the inner and outer shells is formed in circumferentially extending sections about the rotor axis, preferably in two circumferential halves (upper and lower) of 180° each. The upper outer shell half and each inner shell half are individually removable from the turbine without removal of the rotor to enable access to the hot gas path components for maintenance and repair. In the above patent, the inner shell is supported by pins extending between the inner and outer shells in a manner preventing circumferential, axial and radial movement of the shells relative to one another while enabling radial expansion and contraction of the inner shell relative to the outer shell for controlling clearance between the shrouds and the bucket tips.

In the above-noted patent, the clearance control system includes a pair of plenums in each of the inner shell halves and which plenums are connected one to the other by a passageway. Particularly, for each inner shell half, the first or forward plenum overlying the first-stage shrouds and bucket tips has an inlet for receiving cooling air, the cooling air flowing circumferentially about the plenum to the mid-line of the inner shell half. Axially extending passages along diametrically opposite mid-lines extend from the forward plenum back to a similar circumferentially extending aft plenum overlying the second-stage shrouds and buckets. An outlet is provided in the aft plenum. Thus, cooling air at steady-state operation from an external air source is supplied to the first-stage plenum inlet for flow about the plenum, axially along the mid-line and about the second-stage plenum to the outlet. It will be appreciated that by flowing a thermal medium in the described thermal circuit, the inner shell may contract and expand in a radial direction in response to flow of the thermal medium. Consequently, by controlling the thermal expansion or contraction in a radial direction of the inner shell relative to the tips of the buckets of the first and second stages, tip clearance control is afforded. With the advent of a further advanced gas turbine design by assignee, there has, however, been demonstrated a need for an enhanced inner shell cooling circuit.

In accordance with a preferred embodiment, the advanced gas turbine design includes an inner shell having inner shell halves each having a forward and aft section containing plenums communicating with one another such that a thermal medium may be supplied to one section for flow axially to the other section and return to the one section. Particularly, for each inner shell half, the thermal medium is supplied via an inlet for circumferential flow in a first plenum of the first inner shell half section and for flow generally axially along a first set of passageways in communication with a first plenum of the second section for circumferential flow therein. The first plenum of the second section communicates with a second plenum of the second section whereby the flow reverses direction for flow circumferentially about the second section and then along a second set of axial passageways along the mid-line of the inner shell half to the second plenum of the first section. The flow enters circumferentially extending second passage portions in the second plenum of the first section for exit and return to the thermal medium supply.

Preferably, the thermal medium supply comprises an auxiliary thermal medium source independent of turbine operation whereby the temperature of the thermal medium can be controlled independently of the turbine. By flowing the thermal medium in the described circuit, the inner shell can be expanded at a rate at least equal to or greater than the thermal expansion rate of the rotor and buckets during start-up to prevent contact between the turbine tips and the shrouds and to preclude a rate of contraction of the inner shell less than the rate of contraction of the rotor and buckets to avoid contact between the turbine tips and the shrouds during shutdown. During steady-state operation, the temperature of the thermal medium is controlled to expand or contract the inner shell to minimize the clearance between the shrouds and the bucket tips, affording enhanced turbine efficiency.

According to the present invention, there is provided a method of operating a turbine having a rotor including axially spaced buckets carried thereby forming parts of turbine stages, an outer containment shell, an inner shell about the rotor including nozzles carried thereby forming other parts of the turbine stages, the inner shell including axially spaced sections and shrouds carried by the sections about the respective tips of the buckets of the stages, and a passage formed in the inner shell for flow of a thermal medium to control thermal movement of the inner shell, comprising the steps of forming at least partially circumferentially extending first portions of the passage in the sections of the inner shell substantially at each axial location of the buckets of the respective stages, providing a first passageway in the inner shell connecting the first passage portions to one another, flowing a thermal medium through (i) a first passage portion of one section, (ii) the first passageway and (iii) first passage portion of another section, forming at least partially circumferentially extending second portions of the passage in the sections of the inner shell substantially at each axial location of the buckets of the respective stages, providing a second passageway in the inner shell connecting the second passage portions to one another, connecting the first passage portion of another section with the second passage portion of another section for flowing the thermal medium therebetween and flowing the thermal medium through (i) the second passage portion of another section, (ii) the second passageway and (iii) the second passage portion of one section, thereby controlling the thermal radial expansion and contraction of the inner shell and the clearance between tips of the buckets and shrouds of each stage.

In a further preferred embodiment according to the present invention, there is provided a method of operating a turbine having a rotor including axially spaced buckets carried thereby forming parts of turbine stages, an outer containment shell, an inner shell about the rotor including nozzles carried thereby forming other parts of the turbine stages and shrouds about the respective tips of the buckets of the stages, and a passage formed in the inner shell for flow of a thermal medium to control thermal movement of the inner shell, comprising the steps of flowing a thermal medium serially (i) through passage portions of the inner shell at a first axial location corresponding in part to an axial location of the second stage of said turbine, (ii) forwardly along the inner shell from the first axial location to passage portions of the inner shell at a second location corresponding in part to an axial location of a first stage of the turbine and (iii) rearwardly along the inner shell from the second axial location to passage portions of the inner shell at the first axial locations to control the thermal radial expansion and contraction of the inner shell and the clearance between the tips of the buckets and shrouds of each first and second stages.
The invention will now be described in greater detail, by way of example, with reference to the drawings, in which:
FIGURE 1 is a fragmentary cross-sectional view through a portion of a gas turbine illustrating portions of the inner and outer shells;

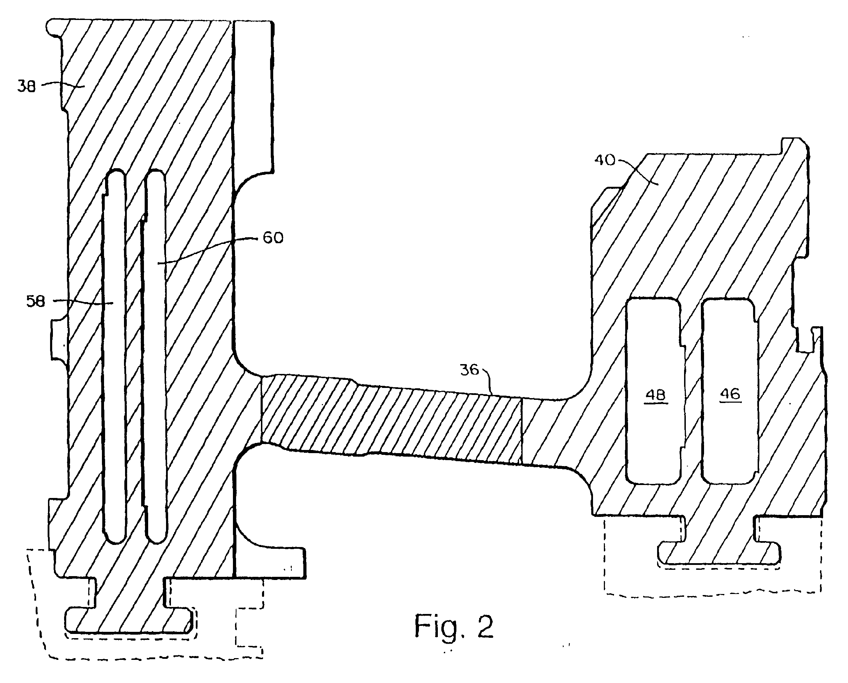

FIGURE 2 is an enlarged cross-sectional view of a portion of the inner shell;
FIGURE 3 is a schematic view taken along an axial plane illustrating the location of the pin connections between the inner and outer shells;
FIGURE 4 is a schematic diagram illustrating the flow circuit for flowing a thermal medium from an external source to and from the inner shell; and
FIGURE 5 is a schematic illustration of the flow circuit for the inner shell.

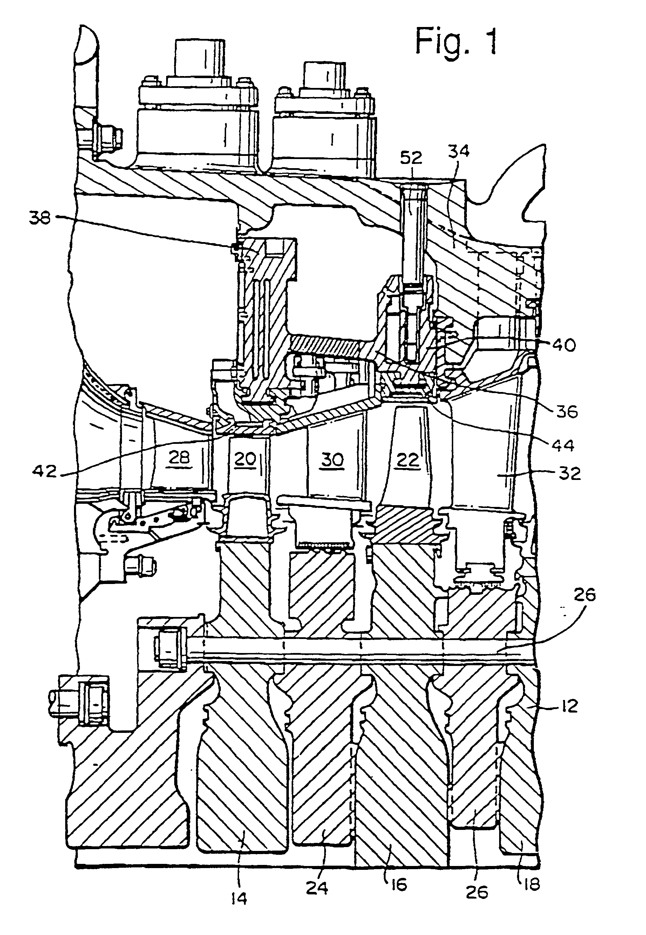

Referring now to the drawings, particularly to Figure 1, there is illustrated a portion of a gas turbine incorporating the present invention. The turbine includes a rotor 12, only a portion of which is illustrated, and which comprises turbine wheels 14, 16 and 18, each carrying a circular array of buckets, the buckets 20 and 22 for wheels 14 and 16 being illustrated. Spacers or disks 24, 26 are interposed between the wheels and the stack-up of wheels and spacers are bolted together by bolts 26 to form the rotor 12. Nozzles are likewise arranged in circumferential arrays, alternating with the buckets of the wheels, nozzles 28, 30 and 32 being illustrated. It will be appreciated that the first stage of the turbine comprises nozzles 28 and buckets 20, the second stage, nozzles 30 and buckets 22, the third stage, nozzles 32 and buckets for wheel 18, and so on, depending upon the number of stages of the gas turbine.

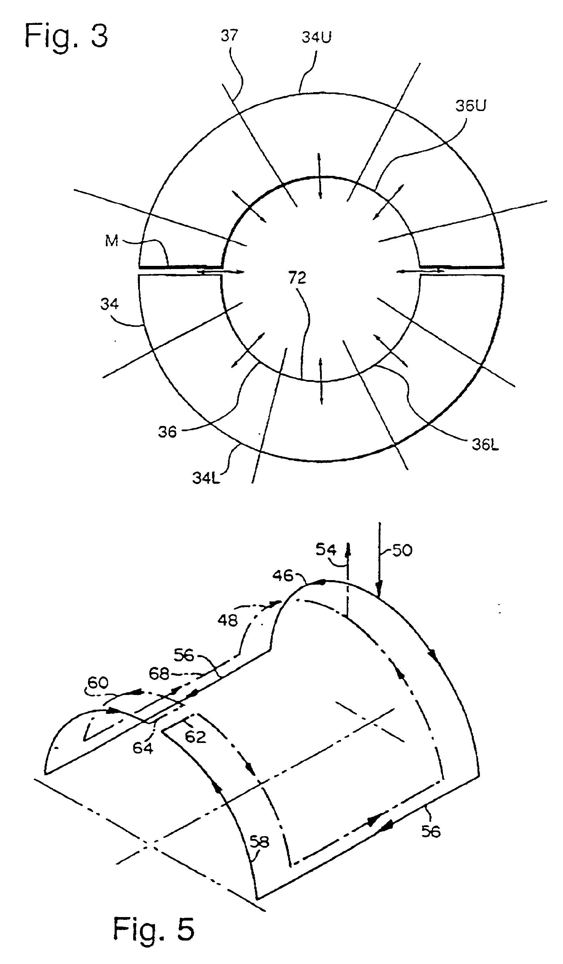

The gas turbine includes an outer structural containment shell 34 and an inner shell 36. Each outer shell and inner shell is formed in semi-circular sections joined along a horizontal mid-line, the upper halves of the outer and inner shells being illustrated. The inner shell 36 includes forward and aft shell sections 38 and 40, respectively, mounted for radial contraction and expansion relative to the outer shell 34 by pins 37. An arrangement of pins for mounting the inner shell and outer shell to one another is described in U.S. Patent No. 5,685,693.
Suffice to say that the inner shell may expand and contract radially, e.g., in the directions of the arrows of Figure 3 in a controlled manner relative to the rotor for adjusting the clearance between the shrouds 42 and 44 carried by the forward and aft shells, respectively. Hence, the inner shell is adjustable radially relative to the tips of the buckets of the corresponding stages, i.e., respective buckets 20 and 22. Also, as schematically illustrated in Figure 3, each of the inner and outer shells is comprised of shell halves extending to a horizontal mid-line M where the upper and lower outer shell halves 34U and 34L are bolted to one another and the upper and lower inner shell halves 36U and 36L are secured to one another.

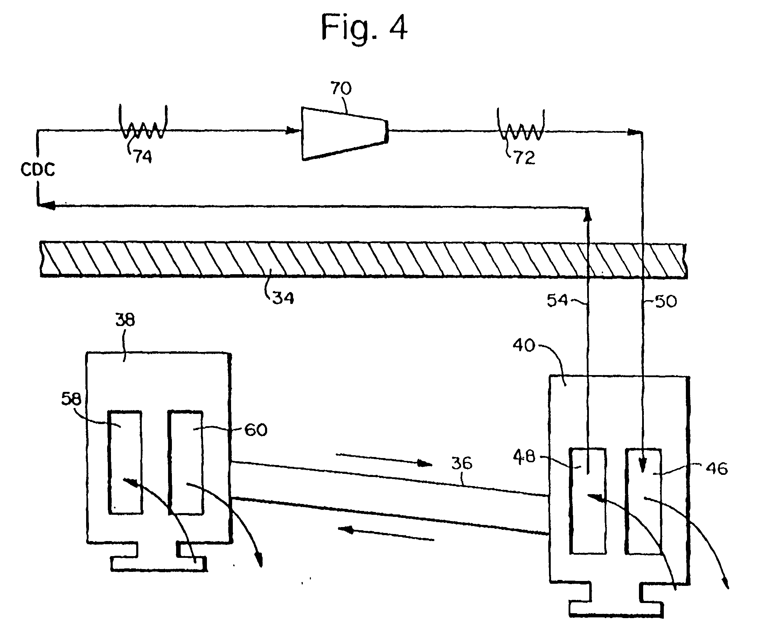

The aft section 40 includes a pair of axially spaced circumferentially extending first and second passage portions 46 and 48, respectively. A thermal medium inlet 50 (Figure 4) lies in communication with the plenum or passage portion 46 by way of a hollow spoolie 52 (Figure 1), in turn in communication with a thermal medium source, described below. It will be appreciated that the first and second passage portions 46 and 48 extend circumferentially about the aft section 40 to adjacent the mid-line of the inner shell half. The inlet 50 preferably is provided medially of the split line for the inner shell half. A spent cooling thermal medium outlet 54 (Figure 4) lies in communication with the second passage portion 48 of the aft inner shell section 40 for returning spent cooling medium to the external source.

The first passage portion 46 of the aft inner shell section 40 communicates with a pair of first passageways 56 extending along the split line of the inner shell half axially forwardly for communication with a first passage portion 58 of the forward inner shell section 38. The first passage portion 58 of the forward section 38 extends circumferentially from the mid-line passages 56 to intermediate locations in communication with second passage portions 60 of the forward section 38 via crossover paths 62 and 64 (Figure 4). The second passage portions 60 of the forward section 38 extend from crossover paths 62 and 64 to the mid-line of the inner shell half to lie in communication with axially rearwardly extending second passageways 68, in turn in communication with the second passage portions 48 of the aft section 40. As will be recalled, the second passage portions 48 lie in communication with the outlet 54.

Referring now to Figure 3, there is illustrated an external or off-turbine device for supplying cooling or heating air to the inner shell, depending upon the operating conditions of the turbine. For example, there may be provided on an off-turbine skid, and a compressor 70 with associated heat exchangers 72 and 74 for selectively cooling and heating the air. Thus, for example, during turbine startup, heated air may be supplied from the heater 72 to the inlet 50 for circulation of heated air in the various passages of the inner shell halves to radially expand the inner shell and hence displace the shrouds radially further outwardly than the tips of the buckets. It will be appreciated that the inner shell thus heats up at a greater rate than the rotor to ensure that adequate clearance is maintained between the shrouds and the bucket tips during startup. In steady-state operations, the temperature of the air supplied the inner shell can be adjusted to contract or expand the inner shell relative to the bucket tips thereby to afford a minimum clearance between the shrouds and bucket tips and enhance the efficiency of the turbine operation. During turbine shutdown, it is important to maintain the rate of contraction of the inner shell less than the rate of contraction of the rotor and buckets to avoid contact between the turbine tips and the shrouds. To that end, the temperature of the thermal medium can be adjusted so that a controlled tip clearance during shutdown is maintained.

## Claims

1. A method of operating a turbine having a rotor (12) including axially spaced buckets (20, 22) carried thereby forming parts of turbine stages, an outer containment shell (34), an inner shell (36) about the rotor including nozzles (28, 30, 32) carried thereby forming other parts of said turbine stages, said inner shell including axially spaced sections (38, 40) and shrouds (42, 44) carried by said sections about the respective tips of said buckets of said stages, and a passage (46, 56, 58, 62, 60, 68, 48) formed in said inner shell for flowing thermal medium to control thermal movement of said inner shell, comprising the steps of:
forming at least partially circumferentially extending first portions (46, 58) of said passage in said sections of said inner shell substantially at each axial location of the buckets of the respective stages;
providing a first passageway (56) in said inner shell connecting the first passage portions to one another;
flowing a thermal medium through (i) a first passage portion (46) of one section, (ii) said first passage way (56) and (iii) first passage portion (58) of another section;
forming at least partially circumferentially extending second portions (60, 48) of said passage in said sections of said inner shell substantially at each axial location of the buckets of the respective stages;
providing a second passageway (68) in said inner shell connecting the second passage portions to one another;
connecting the first passage portion (58) of said another section with the second passage portion (60) of said another section for flowing the thermal medium there between; and,
flowing the thermal medium through (i) said second passage portion (60) of said another section, (ii) said second passageway (68) and (iii) said second passage portion (48) of said of said one section; thereby controlling the thermal radial expansion and contraction of said inner shell and the clearance between tips of the buckets and shrouds of each stage.

2. A method according to Claim 1 wherein said one section lies at an axial location corresponding to a second stage of the turbine and said another section lies at an axial location corresponding to a first stage of the turbine, and flowing the thermal medium serially from said second section to said first section and back to said second section.

3. A method according to Claim 1 or 2, including connecting said inner shell and said outer shell to one another to preclude radial and circumferential movement of said inner shell relative to said outer shell and enable thermal radial expansion and contraction of said inner shell relative to said outer shell.

4. A method according to Claim 1, 2 or 3, including operating the turbine in a steady-state condition, and controlling the temperature of the thermal medium during the steady-state operating condition to control the clearance between the bucket tips and the shrouds.

5. A method according to any preceding claim, including providing a thermal medium source independent of said turbine operation for controlling the temperature of the thermal medium.

6. A method according to any preceding claim including providing a closed circuit (50, 54, 70, 72, 74) for supplying the thermal medium between the source and the passage.

7. A method according to any preceding claim including during shutdown of the turbine, controlling the temperature of the thermal medium to preclude a rate of contraction of the inner shell less than the rate of contraction of the rotor and buckets to avoid contact between the turbine tips and the shrouds.

8. A method according to any preceding claim including during turbine startup, controlling the temperature of the thermal medium to thermally expand the inner shell at a rate at least equal to or greater than the thermal expansion rate of the rotor and buckets to prevent contact between the turbine tips and the shrouds.

9. A method according to any preceding claim including providing an inlet (50) in communication with said passage and connected between said inner and outer shells for receiving the thermal medium from a source external to said turbine, and providing an outlet (54) in communication with said passage and connected between said inner and outer shells for exhausting the thermal medium from the turbine.

10. A method according to any preceding claim wherein said inner shell includes a pair of inner shell halves (36U, 36L) defining a mid-line between said halves, said passage being disposed in one of said inner shell halves, providing said first passage portion (46) of said one section about said one inner shell half substantially to said mid-line thereof providing a pair of first passageway portions (56) of said first passageway generally axially along said mid-line, said first passage portion (58) of said another section forming a pair of paths extending generally from the mid-line of said inner shell half in communication with said pair of first passageway portions, respectively, for flowing the thermal medium substantially about the inner shell halt providing communication between said pair of first passage portion paths and a pair of second passage portions (60) of said passage in said another section, providing a pair of second passageway portions (68) of said second passageway generally extending along said mid-line of said inner shell half and in communication with said second passage portions (48) of said another section and said second passage portions of said one section, providing a thermal medium inlet (50) to said first passage portions of said one section and providing a thermal medium outlet (54) for said second passage portions of said one section whereby said passage forms a closed circuit within said inner shell half.

11. A method of operating a turbine according to claim 1 comprising flow a thermal medium serially (i) through passage portions (46) of the inner shell at a first axial location corresponding in part to an axial location of a second stage of said turbine, (ii) upstream (56, with respect to the direction of flow of turbine working fluid) along said inner shell from a first axial location to passage portion (58. 60) of said inner shell a second location corresponding in part to an axial location of a first stage of the turbine and (iii) downstream (68,) with respect to the direction of flow of turbine working fluid) along said inner shell from said second axial location to passage portions (48) of said inner shell at said first axial location to control the thermal radial expansion and contraction of said inner shell and the clearance between the tips of the buckets and shrouds of each said first and second stages.

12. A method according to Claim 11 wherein said inner shell includes a pair of inner shell halves defining a between said halves, providing an inlet (50) for the thermal medium to said passage portions at said first axial location, splitting the flow of thermal medium from said inlet along arcuate passage portions along said inner shell at said first axial location, flowing the thermal medium from said arcuate flow portions along first plural passageways (56), respectively, to said second axial location and returning the thermal medium from said passage portions (58, 60) at said second axial location along second plural passageway portions (68) to said passage portions at said first axial location and providing an outlet (54) for receiving the thermal medium from said passage portions at said first axial location for flow outwardly of said inner shell.

## Patentansprüche

1. Verfahren zum Betrieb einer Turbine mit einem Rotor (12), zu dem gehören: von diesem getragene axial beabstandete Schaufeln (20, 22), die Teile von Turbinenstufen bilden, ein äußeres Gehäuse (34), ein um den Rotor angeordnetes inneres Gehäuse (36), zu dem durch dieses getragene Düsen (28, 30, 32) gehören, die weitere Teile der Turbinenstufen bilden, wobei das innere Gehäuse axial beabstandete Abschnitte (38, 40) und Hauben (42, 44), die durch die Abschnitte um die entsprechenden Spitzen der Schaufeln der Stufen getragen sind, und einen Durchlasskanal (46, 56, 58, 62, 60, 68, 48) aufweist, der in dem inneren Gehäuseausgebildet ist, um ein thermisches Medium hindurchströmen zu lassen, dass dazu dient, eine thermische Bewegung des inneren Gehäuses unter Kontrolle zu bringen, wobei zu dem Verfahren die Schritte gehören:
in den Abschnitten des innenliegenden Gehäuses im Wesentlichen an jeder axialen Position der Schaufeln der entsprechende Stufen wenigstens teilweise in Umfangsrichtung verlaufende erste Abschnitte (46, 58) des Durchlasskanals auszubilden;
in dem innenliegenden Gehäuse einen ersten Durchlasskanalpfads (56) vorzusehen, der die ersten Durchlasskanalabschnitte miteinander verbindet;
ein thermisches Medium durch (i) einen ersten Durchlasskanalabschnitt (46) eines Abschnitts, durch (ii) den ersten Durchlasskanalpfad (56) und durch (iii) den ersten Durchlasskanalabschnitt (58) eines weiteren Abschnitts strömen zu lassen;
in den Abschnitten des innenliegenden Gehäuses im Wesentlichen an jeder axialen Position der Schaufeln der entsprechenden Stufen wenigstens teilweise in Umfangsrichtung verlaufende zweite Abschnitte (60, 48) des Durchlasskanals auszubilden;
in dem innenliegenden Gehäuse einen zweiten Durchlasskanalpfad (68) auszubilden, der die zweiten Durchlasskanalabschnitte miteinander verbindet;
den ersten Durchlasskanalabschnitt (58) des weiteren Abschnitts mit dem zweiten Durchlasskanalabschnitt (60) des weiteren Abschnitts strömungsmäßig zu verbinden, um das thermische Medium dazwischen strömen zu lassen; und
das thermische Medium durch (i) den zweiten Durchlasskanalabschnitt (60) des weiteren Abschnitts, (ii) den zweiten Durchlasskanalpfad (68) und (iii) den zweiten Durchlasskanalabschnitt (48) des einen Abschnitts strömen zu lassen; um **dadurch** die thermische radiale Expansion und Kontraktion des innenliegenden Gehäuses und den Toleranzabstand zwischen Spitzen der Schaufeln und den Hauben jeder Stufe unter Kontrolle zu bringen.

2. Verfahren nach Anspruch 1, bei dem der eine Abschnitt an einer axialen Position angeordnet ist, die einer zweiten Stufe der Turbine entspricht, und der weitere Abschnitt an einer axialen Position angeordnet ist, die einer ersten Stufe der Turbine entspricht, und das thermische Medium seriell von dem zweiten Abschnitt zu dem ersten Abschnitt und zurück zu dem zweiten Abschnitt geleitet wird.

3. Verfahren nach Anspruch 1 oder 2, bei dem das innere Gehäuse und das äußere Gehäuse strömungsmäßig miteinander verbunden werden, um eine Bewegung in radialer Richtung und in Umfangsrichtung des inneren Gehäuses bezüglich des äußeren Gehäuses auszuschließen und eine thermische radiale Expansion und Kontraktion des inneren Gehäuses bezüglich des äußeren Gehäuses zu ermöglichen.

4. Verfahren nach Anspruch 1, 2 oder 3, mit den Schritten: Betreiben der Turbine unter einer Dauerbetriebsbedingung und Steuern der Temperatur des thermischen Mediums während der Dauerbetriebsbedingung, um den Toleranzabstand zwischen den Schaufelspitzen und den Hauben zu steuern.

5. Verfahren nach einem beliebigen der vorhergehenden Ansprüche, bei dem eine von dem Turbinenbetrieb unabhängige Quelle eines thermischen Mediums vorgesehen ist, um die Temperatur des thermischen Mediums zu steuern.

6. Verfahren nach einem beliebigen der vorhergehenden Ansprüche, wobei ein geschlossener Kreislauf (50, 54, 70, 72, 74) vorgesehen ist, um das thermische Medium zwischen der Quelle und dem Durchlasskanal zu befördern.

7. Verfahren nach einem beliebigen der vorhergehenden Ansprüche, bei dem während eines Herunterfahrens der Turbine die Temperatur des thermischen Mediums gesteuert wird, um auszuschließen, dass die Rate einer Kontraktion des inneren Gehäuses geringer ist als die Rate der Kontraktion des Rotors und der Schaufeln, so dass eine Berührung zwischen den Turbinenspitzen und den Hauben vermieden wird.

8. Verfahren nach einem beliebigen der vorhergehenden Ansprüche, bei dem während des Hochfahrens der Turbine die Temperatur des thermischen Mediums so gesteuert wird, dass sich das innere Gehäuse mit einer thermischen Rate ausdehnt, die wenigstens gleich oder größer ist als die Wärmeausdehnungsrate des Rotors und der Schaufeln, um eine Berührung zwischen den Turbinenspitzen und den Hauben zu verhindern.

9. Verfahren nach einem beliebigen der vorhergehenden Ansprüche, bei dem ein Einlass (50) vorgesehen ist, der mit dem Durchlasskanal in strömungsmäßiger Verbindung steht und zwischen das innere und das äußere Gehäuse strömungsmäßig eingebunden ist, um das thermische Medium von einer außerhalb der Turbine angeordneten Quelle aufzunehmen, und bei dem ein Auslass (54) vorgesehen ist, der mit dem Durchlasskanal in strömungsmäßiger Verbindung steht und zwischen das innere und das äußere Gehäuse eingebunden ist, um das thermische Medium aus der Turbine abzuführen.

10. Verfahren nach einem beliebigen der vorhergehenden Ansprüche, bei dem das innere Gehäuse ein Paar innere Gehäuseschalenhälften (36U, 36L) beinhaltet, die zwischen den Hälften eine Mittellinie definieren, wobei der Durchlasskanal in einer der inneren Gehäuseschalenhälften angeordnet ist, der erste Durchlasskanalabschnitt (46) des einen Abschnitts um die eine innere Gehäuseschalenhälfte im Wesentlichen zu deren Mittellinie vorgesehen wird, ein Paar erste Durchlasskanalpfadabschnitte (56) des ersten Durchlasskanalpfads vorgesehen werden, die im Wesentlichen axial entlang der Mittellinie angeordnet sind, wobei der erste Durchlasskanalabschnitt (58) des weiteren Abschnitts ein Paar Pfade bildet, die sich im Wesentlichen von der Mittellinie der inneren Gehäuseschalenhälfte erstrecken und strömungsmäßig mit dem Paar ersten Durchlasskanalpfadabschnitten entsprechend verbunden sind, um das thermische Medium im Wesentlichen um das innere Gehäuse strömen zu lassen, eine strömungsmäßige Verbindung zwischen dem Paar erster Durchlasskanalabschnittspfade und einem Paar zweiter Durchlasskanalabschnitte (60) des Durchlasskanals in dem weiteren Abschnitt vorgesehen wird, ein Paar zweite Durchlasskanalpfadabschnitte (68) des zweiten Durchlasskanalpfads vorgesehen werden, die sich im Wesentlichen längs der Mittellinie der inneren Gehäuseschalenhälfte erstrecken und mit den zweiten Durchlasskanalabschnitten (48) des weiteren Abschnitts und den zweiten Durchlasskanalabschnitten des einen Abschnitts strömungsmäßig verbunden sind, ein thermischer Mediumeinlass (50) für die ersten Durchlasskanalabschnitte des einen Abschnitts vorgesehen wird und ein thermischer Mediumauslass (54) für die zweiten Durchlasskanalabschnitte des einen Abschnitts vorgesehen wird, wobei der Durchlasskanal innerhalb der inneren Gehäuseschalenhälfte einen geschlossenen Kreislauf bildet.

11. Verfahren zum Betrieb einer Turbine nach Anspruch 1, mit dem Schritt: Strömenlassen eines thermischen Mediums nacheinander (i) durch Durchlasskanalabschnitte (46) des inneren Gehäuses an einer ersten axialen Position, die teilweise einer axiale Position einer zweiten Stufe der Turbine entspricht, (ii) stromaufwärts (55 bezüglich der Richtung einer Strömung des Turbinenarbeitsfluids) längs des inneren Gehäuses von einer ersten axialen Position zu einem Durchlasskanalabschnitt (58, 60) des inneren Gehäuses, wobei eine zweite Position teilweise einer axialen Position einer ersten Stufe der Turbine entspricht, und (iii) stromabwärts (68 bezüglich der Richtung einer Strömung des Turbinenarbeitsfluids) längs des inneren Gehäuses von der zweiten axialen Position hin zu Durchlasskanalabschnitten (48) des inneren Gehäuses an der ersten axialen Position, um die thermische radiale Expansion und Kontraktion des inneren Gehäuses und den Toleranzabstand zwischen den Spitzen der Schaufeln und Hauben sowohl der ersten als auch der zweiten Stufe zu steuern.

12. Verfahren nach Anspruch 11, bei dem das innere Gehäuse ein Paar innere Gehäuseschalenhälften beinhaltet, die eine Mittellinie zwischen den Hälften definiert, mit den Schritten: an der ersten axialen Position einen Einlass (50) für das thermische Medium zu den Durchlasskanalabschnitten vorsehen, den Strom des aus dem Einlass stammenden thermischen Mediums längs bogenförmiger Durchlasskanalabschnitte entlang des inneren Gehäuses an der ersten axialen Position zu splitten, das thermischen Mediums von den bogenförmigen Strömungsabschnitten längs erster mehrfacher Durchlasskanalpfade (56) jeweils zu der zweiten axialen Position zu leiten und das thermische Medium von den Durchlasskanalabschnitten (58, 60) an der zweiten axialen Position längs zweiten mehrfachen Durchlasskanalpfadabschnitten (68) zu den Durchlasskanalabschnitten an der ersten axialen Position zurückkehren zu lassen, und einen Auslass (54) vorzusehen, der dazu dient, das thermische Medium von den Durchlasskanalabschnitten an der ersten axialen Position aufzunehmen, um es aus dem inneren Gehäuse nach außen strömen zu lassen.

## Revendications

1. Procédé d'utilisation d'une turbine comportant un rotor (12) comprenant des auges axialement espacées (20, 22) portées de façon à constituer ainsi des parties d'étages de turbine, une enceinte de confinement extérieure (34), une enceinte intérieure (36) autour du rotor comprenant des buses (28, 30, 32) portées de façon à constituer ainsi d'autres parties desdits étages de turbine, ladite enceinte intérieure comprenant des sections axialement espacées (38, 40) et des carénages (42, 44) portés par lesdites sections autour des pointes respectives desdites auges desdits étages, et un passage (46, 56, 58, 62, 60, 68, 48) formé dans ladite enceinte intérieure pour faire circuler un milieu thermique pour contrôler le mouvement thermique de ladite enceinte intérieure, comprenant les étapes consistant à :
former des premières parties s'étendant au moins partiellement circonférentiellement (46, 58) dudit passage dans lesdites sections de ladite enceinte intérieure sensiblement à chaque emplacement axial des auges des étages respectifs ;
réaliser un premier passage (56) dans ladite enceinte intérieure, reliant les premières parties de passage les unes aux autres ;
faire circuler un milieu thermique à travers (i) une première partie de passage (46) d'une section, (ii) ledit premier passage (56) et (iii) une première partie de passage (58) d'une autre section ;
former des deuxièmes parties s'étendant au moins partiellement circonférentiellement (60, 48) dudit passage dans lesdites sections de ladite enceinte intérieure sensiblement en chaque emplacement axial des auges des étages respectifs ;
réaliser un deuxième passage (68) dans ladite enceinte intérieure, reliant les deuxièmes parties de passage les unes aux autres ;
relier la première partie de passage (58) de ladite autre section à la deuxième partie de passage (60) de ladite autre section pour faire circuler le milieu thermique entre celles-ci ; et
faire circuler le milieu thermique à travers (i) ladite deuxième partie de passage (60) de ladite autre section, (ii) ledit deuxième passage (68) et (iii) ladite deuxième partie de passage (48) de ladite première section ; de façon à contrôler ainsi la dilatation et la contraction thermiques radiales de ladite enceinte intérieure et l'espacement entre les pointes des auges et les carénages de chaque étage.

2. Procédé selon la revendication 1, dans lequel ladite première section se trouve en un emplacement axial correspondant à un deuxième étage de la turbine et ladite autre section se trouve en un emplacement axial correspondant à un premier étage de la turbine, et l'on fait circuler le milieu thermique en série de ladite deuxième section à ladite première section, puis à nouveau vers ladite deuxième section.

3. Procédé selon la revendication 1 ou 2, comprenant le fait de relier ladite enceinte intérieure et ladite enceinte extérieure l'une à l'autre de façon à empêcher le mouvement radial et circonférentiel de ladite enceinte intérieure par rapport à ladite enceinte extérieure et à permettre la dilatation et la contraction thermiques radiales de ladite enceinte intérieure par rapport à ladite enceinte extérieure.

4. Procédé selon la revendication 1, 2 ou 3, comprenant le fait de faire fonctionner la turbine dans une condition stable, et le contrôle de la température du milieu thermique durant la condition de fonctionnement dans l'état stable de façon à contrôler l'espacement entre les pointes des auges et les écrans.

5. Procédé selon l'une quelconque des revendications précédentes, comprenant la réalisation d'une source de milieu thermique indépendante du fonctionnement de ladite turbine pour contrôler la température du milieu thermique.

6. Procédé selon l'une quelconque des revendications précédentes, comprenant la réalisation d'un circuit fermé (50, 54, 70, 72, 74) pour délivrer le milieu thermique entre la source et le passage.

7. Procédé selon l'une quelconque des revendications précédentes, comprenant, durant l'arrêt de la turbine, le contrôle de la température du milieu thermique de façon à empêcher un taux de contraction de l'enceinte intérieure inférieur au taux de contraction du rotor et des auges afin d'éviter un contact entre les pointes de turbine et les carénages.

8. Procédé selon l'une quelconque des revendications précédentes, comprenant, durant le démarrage de la turbine, le contrôle de la température du milieu thermique de façon à dilater thermiquement l'enceinte intérieure à un taux au moins supérieur ou égal au taux de dilatation thermique du rotor et des auges afin d'empêcher le contact entre les pointes de turbine et les carénages.

9. Procédé selon l'une quelconque des revendications précédentes, comprenant la réalisation d'un orifice d'entrée (50) en communication avec ledit passage et relié entre lesdites enceintes intérieure et extérieure pour recevoir le milieu thermique à partir d'une source extérieure à ladite turbine, et la réalisation d'un orifice de sortie (54) en communication avec ledit passage et relié entre lesdites enceintes intérieure et extérieure pour évacuer le milieu thermique de la turbine.

10. Procédé selon l'une quelconque des revendications précédentes, dans lequel ladite enceinte intérieure comprend une paire de moitiés d'enceinte intérieure (36U, 36L) définissant une ligne médiane entre lesdites moitiés, ledit passage étant disposé dans l'une desdites moitiés d'enceinte intérieure, on réalise ladite première partie de passage (46) de ladite première section autour de ladite première moitié d'enceinte intérieure sensiblement vers ladite ligne médiane de celle-ci, on réalise une paire de premières parties de passage (56) dudit premier passage de façon globalement axiale le long de ladite ligne médiane, ladite première partie de passage (58) de ladite autre section formant une paire de trajets s'étendant globalement à partir de la ligne médiane de ladite moitié d'enceinte intérieure en communication avec ladite paire de premières parties de passage, respectivement, pour faire circuler le milieu thermique sensiblement autour de la moitié d'enceinte intérieure, on réalise une communication entre ladite paire de trajets de premières parties de passage et une paire de deuxièmes parties de passage (60) dudit passage dans ladite autre section, on réalise une paire de deuxièmes parties de passage (68) dudit deuxième passage s'étendant globalement le long de ladite ligne médiane de ladite moitié d'enceinte intérieure et en communication avec lesdites deuxièmes parties de passage (48) de ladite autre section et lesdites deuxièmes parties de passage de ladite première section, on réalise un orifice d'entrée de milieu thermique (50) vers lesdites premières parties de passage de ladite première section et on réalise un orifice de sortie de milieu thermique (54) pour lesdites deuxièmes parties de passage de ladite première section, grâce à quoi ledit passage forme un circuit fermé à l'intérieur de ladite moitié d'enceinte intérieure.

11. Procédé d'utilisation d'une turbine selon la revendication 1, comprenant la circulation d'un milieu thermique en série (i) à travers des parties de passage (46) de l'enceinte intérieure en un premier emplacement axial correspondant en partie à un emplacement axial d'un deuxième étage de ladite turbine, (ii) en amont (56, par rapport à la direction de circulation du fluide de travail de la turbine) le long de ladite enceinte intérieure à partir d'un premier emplacement axial par rapport à une partie de passage (58, 60) de ladite enceinte intérieure, un deuxième emplacement correspondant en partie à un emplacement axial d'un premier étage de la turbine et (iii) en aval (68, par rapport à la direction de circulation du fluide de travail de la turbine) le long de ladite enceinte intérieure à partir dudit deuxième emplacement axial vers des parties de passage (48) de ladite enceinte intérieure audit premier emplacement axial de façon à contrôler la dilatation et la contraction thermiques radiales de ladite enceinte intérieure et l'espacement entre les pointes des auges et les carénages desdits premier et deuxième étages.

12. Procédé selon la revendication 11, dans lequel ladite enceinte intérieure comprend une paire de moitiés d'enceinte intérieure définissant une ligne médiane entre lesdites moitiés, on réalise un orifice d'entrée (50) pour le milieu thermique vers lesdites parties de passage au niveau dudit premier emplacement axial, on divise la circulation de milieu thermique à partir dudit orifice d'entrée le long de parties de passage en forme d'arc le long de ladite enceinte intérieure au niveau dudit premier emplacement axial, on fait circuler le milieu thermique à partir desdites parties de circulation en forme d'arc le long de plusieurs premiers passages (56), respectivement, vers ledit deuxième emplacement axial et on fait revenir le milieu thermique à partir desdites parties de passage (58, 60) au niveau dudit deuxième emplacement axial le long de plusieurs deuxièmes parties de passage (68) vers lesdites parties de passage au niveau dudit premier emplacement axial, et on réalise un orifice de sortie (54) pour recevoir le milieu thermique à partir desdites parties de passage au niveau dudit premier emplacement axial pour la circulation vers l'extérieur de ladite enceinte intérieure.
